# EUROPEAN PATENT APPLICATION

(11) **EP 2 789 623 A1**
(43) Date of publication of application: **15.10.2014**
(21) Application number: 13162679.8
(22) Date of filing: 08.04.2013
(51) Int. Cl.: C07F 15/00

(54) **Process for the diastereoselective preparation of ruthenium complexes**

(71) Applicant: Syngenta Participations AG, 4058 Basel (CH)
(72) Inventor: The designation of the inventor has not yet been filed
(74) Representative: Syngenta International AG

(57) **Abstract**

The present invention relates to a process for the preparation of a compound of formula I 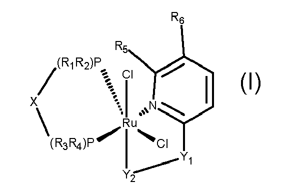 wherein X is -CH₂-, -CH₂-CH₂-, -CH₂-CH₂-CH₂- or -CH₂-CH₂-CH₂-CH₂-;
Y₁ is -CH₂- or -CH₂-CH₂-; Y₂ is NHR₇ or SH; wherein R₇ is hydrogen, C₁-C₄alkyl or phenyl;
R₁ and R₂, independently from each other, represent aliphatic or aromatic groups;
R₃ and R₄, independently from each other, represent aliphatic or aromatic groups; R₅ and R₆ are each hydrogen or represent together with the carbon atoms to which they are bonded, a phenyl ring; which process comprises reacting a compound of formula II

RuCl₂R₁ (II)

wherein R₁ is defined as at least one cyclic or non-cyclic molecule containing at least one alkene or alkyne moiety coordinating to the metal in a η-2 (hapto-2) coordination mode; or R₁ is defined as at least one nitrogen, oxygen or sulfur containing molecule in which the beforementioned atoms coordinate to the metal; in the presence of an inert solvent with a compound of formula III 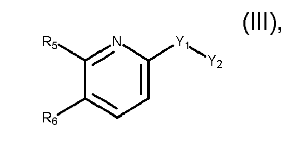 wherein R₅, R₆, Y₁ and Y₂ are as defined under formula I, and a phosphane of formula IV

R₃R₄P-X-PR₁R₂ (IV)

wherein R₁, R₂, R₃, R₄ and X are as defined under formula I.

## Description

The present invention relates to a process for the diastereoselective preparation of ruthenium complexes and their use as catalysts in the hydrogenation of C=N and C=O double bonds and in the oxidative synthesis of amides or esters.

It is known that the cis-form of certain ruthenium(II) complexes, for example RuCl₂[PPh₂(CH₂)₄PPh₂][2-(H₂NCH₂)C₅H₄N] of formula la 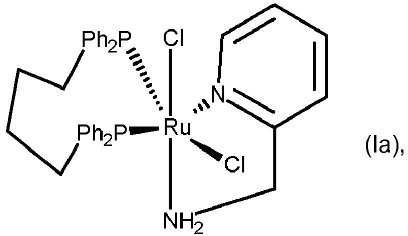 are useful as a highly active hydrogenation catalysts. Said complex, its preparation and use as catalyst is described, for example, in WO 2005/105819 and in Crabtree et al. Organometallics 2011, 30, 4174-4179. The catalyst can either adopt a cis or a trans configuration with respect to the chloro ligands.The cis-form of this complex is especially preferred since it shows much higher reactivity in the above mentioned hydrogenation reactions (Baratta et al., Organometallics 2005, 24, 1660-1669). It is therefore highly desired to selectively prepare the cis-form of said complex.

The synthesis of the compound of formula la according to WO 2005/105819, Crabtree et al. Organometallics 2011, 30, 4174-4179 and Baratta et al., Organometallics 2005, 24, 1660-1669 is based on a two step procedure. Further, long reaction times (20 hours) are described in preparatory examples 5 and 6 of WO 2005/105819. Moreover, all these procedures start from a catalyst precursor containing triphenlyphosphine as ligand. Said catalyst precursor has the formula RuCl₂(PPh₃)n (with n= 3.0, 3.1, 3.2, 3.3, 3.4, 3.5, 3.6, 3.7, 3.8, 3.9 and 4.0) (Caulton et al., J. Am. Chem. Soc. 1975, 4221-4228). It can be derived from the formula of said catalyst precursor that it contains a large amount of triphenlyphosphine ligand that has to be exchanged in the next step. From an economical and environmental point of view this exchange is highly problematic as at least three equivalents of phosphorous waste are generated per equivalent of catalyst.

The aim of the present invention is therefore to provide a novel, robust process for the diastereoselective production of the cis-form of RuCl₂ complexes of formula I in high yields and good quality in an economically advantageous way.

Thus, according to the present invention, there is provided a process for the preparation of a compound of formula I 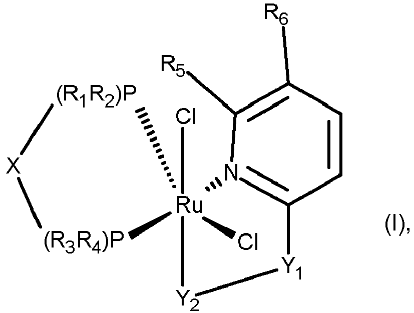 wherein
X is -CH₂-, -CH₂-CH₂-, -CH₂-CH₂-CH₂- or -CH₂-CH₂-CH₂-CH₂-;
Y₁ is -CH₂- or -CH₂-CH₂-;
Y₂ is NHR₇ or SH; wherein R₇ is hydrogen, C₁-C₄alkyl or phenyl;
R₁ and R₂, independently from each other, represent aliphatic or aromatic groups;
R₃ and R₄, independently from each other, represent aliphatic or aromatic groups; R₅ and R₆ are each hydrogen or represent together with the carbon atoms to which they are bonded, a phenyl ring; which process comprises reacting a compound of formula II

RuCl₂R₈ (II)

wherein R₈ is defined as
at least one cyclic or non-cyclic molecule containing at least one alkene or alkyne moiety coordinating to the metal in a η-2 (hapto-2) coordination mode;
or R₈ is defined as
at least one nitrogen, oxygen or sulfur containing molecule in which the beforementioned atoms coordinate to the metal;
in the presence of an inert solvent with a compound of formula III 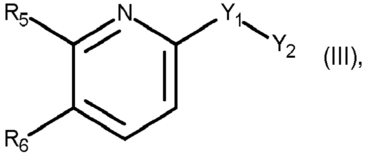 wherein R₅, R₆, Y₁ and Y₂ are as defined under formula I, and a phosphane of formula IV

R₃R₄P-X-PR₁R₂ (IV)

wherein R₁, R₂, R₃, R₄ and X are as defined under formula I.

Cyclooctadiene is preferably used in form of the 1,5-cyclooctadiene. κ signifies the coordination atom (in κS or κO). dmso is dimethylsulfoxide.
R₁, R₂, R₃ and R₄ are preferably phenyl.
R₅ and R₆ are preferably hydrogen.
Y₁ is preferably -CH₂-.
Y₂ is preferably NH₂;
X is preferably -CH₂-CH₂-CH₂-CH₂-.

R₈ as a cyclic or non-cyclic molecule containing at least one alkene or alkyne moiety coordinating to the metal in a η-2 (hapto-2) coordination mode is preferably cyclooctadiene, or bicyclo[2.2.1]hepta-2,5-diene (norbornadiene).

R₈ as a nitrogen, oxygen or sulfur containing molecule in which the beforementioned atoms coordinate to the metal is preferably dimethylsulfoxide resulting in RuCl₂(dmso-κORuCl₂(dmso-κS)₃(dmso-κO) or RuCl₂(dMSO-κS)₄ as precursors.

The process according to the present invention is especially useful for the preparation of a catalyst of the formula la

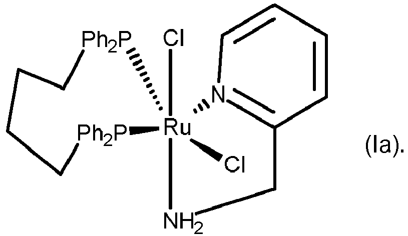

The reaction is preferably performed as an one pot procedure. To achieve economically favourable reaction times, the reaction is executed at temperatures above 112°C ( temperature at a pressure of 1023.25 hPa) in an inert solvent. Suitable inert solvents are ketones, preferably methyl isobutylketone, esters, preferably ethyl butyrate and aromatic solvents or mixtures of aromatic solvents with a suitable boiling point range, preferably xylene and halogenated aromatic compounds preferably chlorobenzene.

An advantage of the one pot procedure in particular for large-scale manufacturing are significantly reduced reaction times. In addition, phosphane containing waste is remarkably reduced compared to the prior art process described in WO 2005/105819.

The synthesis of the precursors can be accomplished by a person skilled in the art following the procedures described in Albers et. al. Inorg. Synth. 1989, 26, 68-77 for RuCl₂(cyclooctanediene) and Albers et. al. Inorg. Synth 1989, 26, 249-258 for RuCl₂(bicyclo[2.2.1]hepta-2,5-diene) or Castellano et. al. Inorg. Chim. Acta. 2009, 363, 283-287 for [RuCl₂(dmso-κS)₃(dmso-κO)] as well as Riant et. al. Chem. Eur. J. 2009, 15, 6267-6268) for RuCl₂(dmso-κS)₄.

The catalyst precursors RuCl₂(CyClooctanediene) and RuCl₂(bicyclo[2.2.1]hepta-2,5-diene) show polymeric structures. In these cases the molecular formulae are more exactly represented by [RuCl₂(cyclooctanediene)]ₙ and [RuCl₂(bicyclo[2.2.1]hepta-2,5-diene)]ₙ. this fact is also described in the above mentioned literature citations.
Preferably precursors with highest metal content and purities are used
- typically 29-37 weight-% ruthenium for [RuCl₂(cyclooctanediene)]ₙ,
- 31-39 weight-% ruthenium for [RuCl₂(bicyclo[2.2.1]hepta-2,5-diene]ₙ and
- 16-21 weight-% ruthenium for [RuCl₂(dmso-κS)₃(dmso-κO)] and for RuCl₂(dmso-κS)₄.

The efficiency of the catalysts of formula la made from [RuCl₂(COD)]ₙ as the precursor is equivalent to that of the catalyst of formula la made from [RuCl₂(PPh₃)ₙ] as the precursor for both reduction under hydrogen atmosphere and transfer hydrogenation.

**Table 1 Catalytic reduction of acetophenone to 1-phenylethanol under hydrogen atmosphere in the presence of ruthenium complexes**

| **Pre-catalyst** | **Molar ratio** | **Pressure** | **Conversion** | **Reaction Time** |
|---|---|---|---|---|
| | Acetophenone/Ru/Base | bar | % | min |
| [RuCl₂(PPh₃)ₙ] | 4000/1/85 | 9 | 99 | 225 |
| [RUCl₂(COD)]ₙ | 4000/1/85 | 9 | 99 | 225 |

**Table 2 Catalytic reduction of acetophenone to 1-phenylethanol in the presence of ruthenium complexes**

| **Pre-catalyst** | **Molar ratio** | **Conversion** | **Reaction Time** |
|---|---|---|---|
| | Acetophenone/Ru/Base | % | min |
| [RuCl₂(PPh₃)ₙ] | 4000/1/85 | 98 | 30 |
| [RUCl₂(COD)]ₙ | 4000/1/85 | 94 | 60 |

### Preparatory examples:

### Example P1: Preparation of RuCl₂[PPh₂(CH₂)₄PPh₂][2-H₂NCH₂)C₅H₄N] of formula la

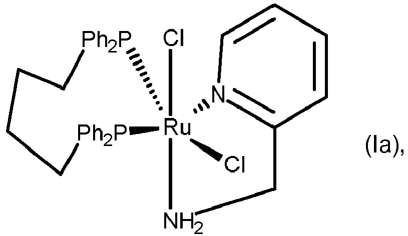

The catalyst precursor, preferably [RuCl₂(COD)]n (1 eq.), 4-bis(diphenylphosphino)butane (1.0-1.2 eq., preferably 1.0 eq.) and 2-picolylamine (1.0-1.4 eq., preferably 1.225 eq.) were dissolved in one of the above mentioned solvents, preferably methyl isobutylketone (10-20 ml/g Ru-precursor, preferably 20 ml/g). The mixture was heated to reflux for 3 - 5 hours and then cooled to ambient temperature. The solid precipitate was filtered off and washed with the same solvent that was used for the reaction. A person skilled in the art can determine the cis-/trans- isomeric ratio by NMR. The diastereomeric ratios generated by this method are usually in the range of d.r. (diastereomeric ratio) >98% towards the cis isomer. The same results can be achieved starting with [RuCl₂(dmso-κS)₃(dmso-κO)], [RuCl₂(dmso-κS)₄]or [RuCl₂(bicyclo[2.2.1]hepta-2,5-diene)]ₙ as precursor.

## Claims

1. A process for the preparation of a compound of formula I 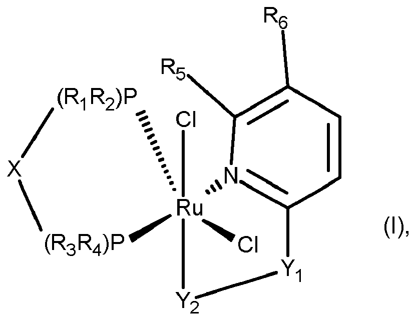 wherein
X is -CH₂-, -CH₂-CH₂-, -CH₂-CH₂-CH₂- or -CH₂-CH₂-CH₂-CH₂-;
Y₁ is -CH₂- or -CH₂-CH₂-;
Y₂ is NHR₇ or SH; wherein R₇ is hydrogen, C₁-C₄alkyl or phenyl;
R₁ and R₂, independently from each other, represent aliphatic or aromatic groups;
R₃ and R₄, independently from each other, represent aliphatic or aromatic groups; R₅ and R₆ are each hydrogen or represent together with the carbon atoms to which they are bonded, a phenyl ring; which process comprises reacting a compound of formula II
RuCl₂R₈ (II)
wherein R₈ is defined as
at least one cyclic or non-cyclic molecule containing at least one alkene or alkyne moiety coordinating to the metal in a η-2 (hapto-2) coordination mode;
or R₈ is defined as
at least one nitrogen, oxygen or sulfur containing molecule in which the beforementioned atoms coordinate to the metal;
in the presence of an inert solvent with a compound of formula III 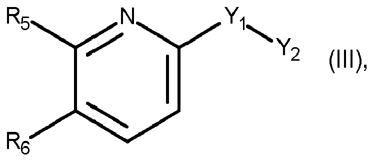 wherein R₅, R₆, Y₁ and Y₂ are as defined under formula I, and a phosphane of formula IV
R₃R₄P-X-PR₁R₂ (IV)
wherein R₁, R₂, R₃, R₄ and X are as defined under formula I.

2. A process according to claim 1 for the preparation of the compound of formula la

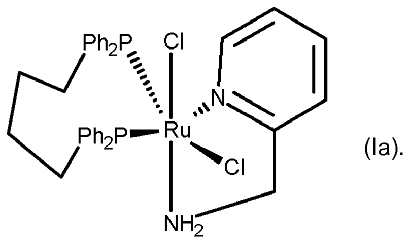

3. The compound of formula I 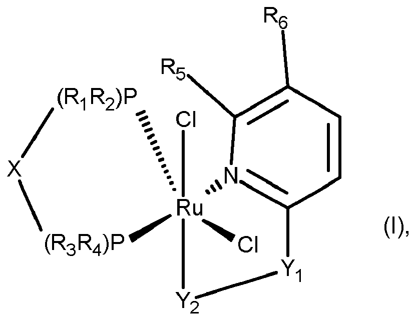 wherein
X is -CH₂-, -CH₂-CH₂-, -CH₂-CH₂-CH₂- or -CH₂-CH₂-CH₂-CH₂-;
Y₁ is -CH₂- or -CH₂-CH₂-;
Y₂ is NHR₇ or SH; wherein R₇ is hydrogen, C₁-C₄alkyl or phenyl;
R₁ and R₂, independently from each other, represent aliphatic or aromatic groups;
R₃ and R₄, independently from each other, represent aliphatic or aromatic groups; R₅ and R₆ are each hydrogen or represent together with the carbon atoms to which they are bonded, a phenyl ring; which process comprises reacting a compound of formula II
RuCl₂R₈ (II)
wherein R₈ is defined as
at least one cyclic or non-cyclic molecule containing at least one alkene or alkyne moiety coordinating to the metal in a η-2 (hapto-2) coordination mode;
or R₈ is defined as
at least one nitrogen, oxygen or sulfur containing molecule in which the beforementioned atoms coordinate to the metal;
in the presence of an inert solvent with a compound of formula III 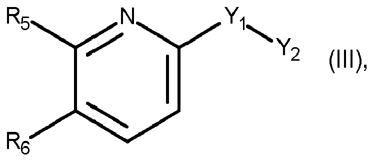 wherein R₅, R₆, Y₁ and Y₂ are as defined under formula I, and a phosphane of formula IV
R₃R₄P-X-PR₁R₂ (IV)
wherein R₁, R₂, R₃, R₄ and X are as defined under formula I;
prepared by the process according to claim 1.
